(19) **Europäisches Patentamt / European Patent Office / Office européen des brevets**

(11) **EP 3 121 675 B1**

(12) **EUROPEAN PATENT SPECIFICATION**

(45) Date of publication and mention
of the grant of the patent:
**02.10.2019 Bulletin 2019/40**

(51) Int Cl.:
**G05D 1/00** (2006.01)  **G05D 1/08** (2006.01)
**G05D 1/10** (2006.01)

(21) Application number: **15382382.8**

(22) Date of filing: **23.07.2015**

(54) **METHOD FOR POSITIONING AIRCRAFTS BASED ON ANALYZING IMAGES OF MOBILE TARGETS**

VERFAHREN ZUR POSITIONIERUNG VON FLUGZEUGEN AUF GRUNDLAGE DER ANALYSE VON BILDERN MOBILER ZIELE

PROCÉDÉ DE POSITIONNEMENT D'AVIONS EN FONCTION D'ANALYSE D'IMAGES DE CIBLES MOBILES

(84) Designated Contracting States:
**AL AT BE BG CH CY CZ DE DK EE ES FI FR GB GR HR HU IE IS IT LI LT LU MC MK MT NL NO PL PT RO RS SE SI SK SM TR**

(43) Date of publication of application:
**25.01.2017 Bulletin 2017/04**

(73) Proprietor: **The Boeing Company**
**Chicago, IL 60606-1596 (US)**

(72) Inventors:
• **CASADO MAGAÑA, Enrique**
  **28042 MADRID (ES)**
• **SCARLATTI, David**
  **28042 MADRID (ES)**
• **ESTEBAN CAMPILLO, David**
  **28042 MADRID (ES)**
• **MAZA ALCAÑIZ, Jesús Iván**
  **11300 CADIZ (ES)**
• **CABALLERO BENITEZ, Fernando**
  **41003 SEVILLA (ES)**

(74) Representative: **Carvajal y Urquijo, Isabel et al**
**Clarke, Modet & Co.**
**Suero de Quiñones, 34-36**
**28002 Madrid (ES)**

(56) References cited:

• SANG YUN ET AL: "Planning algorithm based on airborne sensor for UAV to track and intercept moving target in dynamic environment", PROCEEDINGS OF 2014 IEEE CHINESE GUIDANCE, NAVIGATION AND CONTROL CONFERENCE, IEEE, 8 August 2014 (2014-08-08), pages 1972-1977, XP032722096, DOI: 10.1109/CGNCC.2014.7007480 ISBN: 978-1-4799-4700-3 [retrieved on 2015-01-12]
• JAY HYUK CHOI ET AL: "Tracking an unknown moving target from UAV: Extracting and localizing an moving target with vision sensor based on optical flow", AUTOMATION, ROBOTICS AND APPLICATIONS (ICARA), 2011 5TH INTERNATIONAL CONFERENCE ON, IEEE, 6 December 2011 (2011-12-06), pages 384-389, XP032106829, DOI: 10.1109/ICARA.2011.6144914 ISBN: 978-1-4577-0329-4
• MORBIDI FABIO ET AL: "Active Target Tracking and Cooperative Localization for Teams of Aerial Vehicles", IEEE TRANSACTIONS ON CONTROL SYSTEMS TECHNOLOGY, IEEE SERVICE CENTER, NEW YORK, NY, US, vol. 21, no. 5, 1 September 2013 (2013-09-01), pages 1694-1707, XP011526018, ISSN: 1063-6536, DOI: 10.1109/TCST.2012.2221092 [retrieved on 2013-08-12]
• DON J TORRIERI: "Statistical Theory of Passive Location Systems", IEEE TRANSACTIONS ON AEROSPACE AND ELECTRONIC SYSTEMS, IEEE SERVICE CENTER, PISCATAWAY, NJ, US, vol. AES-10, no. 2, 1 March 1984 (1984-03-01), pages 183-198, XP011167896, ISSN: 0018-9251

EP 3 121 675 B1

**Description**

## TECHNICAL FIELD

The present disclosure relates to a method for positioning aircrafts based on analyzing images of mobile targets, in particular suitable for unmanned aircrafts.

By means of the method underlying the present disclosure, it is possible to control the positioning of an aircraft, in an independent manner on the part of said aircraft, to track one or more mobile targets, by analyzing the images of said mobile targets obtained by means of a camera mounted on said aircraft.

This method can be used in the industry dedicated to the design, manufacture and development of navigation and remote tracking systems of mobile targets.

## BACKGROUND

At present, there are some approaches to the problem posed, although said approaches are directed at resolving the problem of tracking objects by means of planes, tracking which comprises the planes performing maneuvers following elliptical trajectories around the object to be tracked.

An example of the approach mentioned in the previous paragraph is found in New target monitoring Guidance Laws for UAV. (PhD Thesis. Niki Regina. 2011).

In said document, the behavior of unmanned planes, which have been allocated to track fixed and moving objects situated on land, is described when said planes are subjected to different atmospheric conditions. The document mentioned proposes defining optimum tracking trajectories for unmanned planes as a tracking strategy.

On the other hand, Yun Sang et al. (Proceedings of 2014 IEEE Chinese guidance, navigation and control conference) describes a planning algorithm based on airborne sensor for UAV to track and intercept moving target in dynamic environment according to the preamble of claim 1.

By means of the method underlying the present disclosure, tracking of mobile targets by aircrafts is achieved, in particular helicopters and other aircrafts capable of remaining suspended in the air in a fixed position.

The method underlying the present disclosure is implemented in said aircrafts in such a way that the aircrafts can efficiently track mobile targets in an independent manner and without being externally radio controlled.

The method underlying the present disclosure takes benefit from previous research on image analysis, such as the one disclosed in: "Low and Medium Level Vision using Channel Representations", Forssén, P.-E. (2004). PhD thesis, Linköping University, Sweden, SE-581 83 Linköping, Sweden. Dissertation No. 858, ISBN 91-7373-876-X.

## SUMMARY

In order to achieve the goals mentioned above, a novel method for positioning aircrafts based on analyzing images of mobile targets is described in the present disclosure.

According to the method for positioning aircrafts based on analyzing images of mobile targets, the method includes the following steps:

   a. identifying at least one mobile target by means of at least one image obtained by means of at least one camera mounted on at least one aircraft;

   b. determining, by means of internal sensors of the aircraft, the coordinates of the aircraft with respect to a Global Reference System;

   c. determining the coordinates of the mobile target with respect to the Global Reference System;

   d. determining an area of uncertainty associated to the determination of the coordinates of the mobile target with respect to the Global Reference System;

   e. determining an optimum position of the aircraft from which to monitor the mobile target in such a way that the area of uncertainty associated to the determination of the coordinates of the mobile target with respect to the Global Reference System is minimized, and;

   f. moving the aircraft to the optimum position.

According to a preferred embodiment of the method, the step of determining the coordinates of the mobile target with respect to the Global Reference System includes:

 a. determining, by means of at least one sensor mounted on the aircraft, the distance, $D_t$, existing between the aircraft and the mobile target (this sensor may be a telemeter/laser telemeter mounted on the aircraft);

 b. determining the coordinates, $u_t$, $v_t$, of the mobile target with respect to axes, u, v, of the camera image;

 c. determining the angle, $\theta$, of the camera with respect to fuselage of the aircraft (this angle is usually a fixed angle previously known, or a controllable angle with which an operator can position the camera with respect to the aircraft's fuselage);

 d. determining, by means of at least one sensor mounted on the aircraft, the orientation of the aircraft with respect to the Global Reference System, wherein the orientation of the aircraft with respect to the Global Reference System is given by means of at least a yaw angle $\alpha_w$ of the aircraft (this angle is typically given by an aircraft's gyroscope);

 e. applying an algorithm to transform the coordinates, $u_t$, $v_t$, of the mobile target within the camera image, into the coordinates, $x_t$, $y_t$, $z_t$, of the mobile target with respect to the Global Reference System. A pinhole model of the camera may be used for obtaining these coordinates.

According to a possible embodiment of the method, the following algorithm may be used to determine the coordinates of the mobile target with respect to the Global Reference System:

$$s * \widetilde{m} = C * T_C^G * \widetilde{M} = C * [R_C^G \quad \hat{t}_C] * \widetilde{M}$$

- where $\tilde{m}$ is defined as $\widetilde{m} = \begin{bmatrix} u_t \\ v_t \\ 1 \end{bmatrix}$, which is a transformed vector (1 dimension added) of vector $\overrightarrow{m}_t = \begin{bmatrix} u_t \\ v_t \end{bmatrix}$;

- where "s", is a predetermined coefficient (scale factor) whose value is:

$$s = \frac{D_t - f}{f}$$

- where "f" is the focal length of the camera (given by the camera characteristics);

- where $\tilde{M}$ is defined as $\widetilde{M} = \begin{bmatrix} x_t \\ y_t \\ z_t \\ 1 \end{bmatrix}$, which is a transformed vector (1 dimension added) of vector $\overrightarrow{M}_t = \begin{bmatrix} x_t \\ y_t \\ z_t \end{bmatrix}$;

- where $T_C^G$ is a rotation and translation matrix for passing from the Global Reference System to a reference system of the aircraft, where $T_C^G$ is a composition given by: $T_C^G = [R_C^G \quad \hat{t}_C]$;

- where "$C$" is a matrix called an "intrinsic matrix" of the camera defined by:

$$C = \begin{bmatrix} \alpha_u & \gamma & u_0 \\ 0 & \alpha_v & v_0 \\ 0 & 0 & 1 \end{bmatrix}$$

- where "$u_0$" and "$v_0$" are the coordinates of the central point of the camera image;

- where "$\alpha_u$" and "$\alpha_v$" are scaling factors applied to the axes, "u", "v", of the camera image, and;

- "$\gamma$" is a parameter which defines the orthogonality between the axes, "u", "v", of the plane of the camera image;

- where $[R_C^G \quad \hat{t}_C]$ is a composed matrix given by:

$$[R_C^G \quad \hat{t}_C] = \begin{bmatrix} R_C^G & \hat{t}_C \\ \mathbf{000} & \mathbf{1} \end{bmatrix};$$

- where $\hat{t}_C$ is a translation vector, pointing from the origin of the Global Reference System to the origin of a reference system of the camera (the coordinated reference system of the camera and the coordinated reference system of the aircraft may coincide, in case, for example, of cameras located under the fuselage of quadcopters or quadrotors);

- where $R_C^G$ is a rotation matrix among the reference system of the camera and the Global Reference System, which is given by:

$$R_C^G = R_U^C * R_G^U$$

- where $R_U^C$ is a rotation matrix among the reference system of the camera and the reference system of the aircraft, and where $R_G^U$ is a rotation matrix among the reference system of the aircraft and the Global Reference System;

- where, for null roll and pitch angles of the aircraft, $R_G^U$ is given by:

$$R_G^U = \begin{bmatrix} \sin\alpha_w & \cos\alpha_w & 0 \\ \cos\alpha_w & -\sin\alpha_w & 0 \\ 0 & 0 & -1 \end{bmatrix},$$

and;

- where, for a camera aligned with a plane of symmetry of the aircraft and inclined at an angle θ with respect to the fuselage of the aircraft, $R_U^C$ is given by:

$$R_U^C = \begin{bmatrix} 0 & \sin\theta & \cos\theta \\ 1 & 0 & 0 \\ 0 & \cos\theta & -\sin\theta \end{bmatrix}.$$

According to a possible embodiment of the method, the area of uncertainty associated to the determination of the position of the mobile target with respect to the Global Reference System is given by the following mathematical expression of an ellipse in a horizontal surface:

$$(x - k)^T * \Phi * (x - k) = 1$$

- where "$x$" is a vector, given by $x = \begin{pmatrix} x \\ y \end{pmatrix}$, where "x", "y" express generic horizontal coordinates in the Global Reference System;

- where "$k$" is a vector, given by $k = \begin{pmatrix} x_t \\ y_t \end{pmatrix}$, comprising the coordinates of the center of the ellipse, which are the coordinates (previously determined), $x_t$, $y_t$, of the mobile target with respect to the Global Reference System in a horizontal plane (the "z" component is disregarded (it is considered as known by any GIS database));

- where $\Phi$ is a matrix of coefficients indicating the shape of the ellipse, wherein $\Phi$ is given by:

$$\boldsymbol{\Phi} = \begin{pmatrix} \varphi_{11} & \varphi_{12} \\ \varphi_{21} & \varphi_{22} \end{pmatrix};$$

The eigenvalues of matrix $\Phi$ are calculated based on the expression:

$$\det(\boldsymbol{\Phi} - \lambda * \boldsymbol{I}) = 0$$

from where:

$$\lambda_{1,2} = \frac{(\varphi_{11} + \varphi_{22}) \pm \sqrt[2]{(\varphi_{11} - \varphi_{22})^2 + 4 * \varphi_{12}^2}}{2}$$

Thus, the eigenvectors $\omega_1$, $\omega_2$ of matrix $\Phi$ may be calculated based on the equations:

$$\boldsymbol{\Phi} * \boldsymbol{\omega}_1 = \lambda_1 * \boldsymbol{\omega}_1$$

$$\boldsymbol{\Phi} * \boldsymbol{\omega}_2 = \lambda_2 * \boldsymbol{\omega}_2$$

- wherein matrix $\Phi$ is calculated based the expression:

$$\boldsymbol{\Phi} = {}^1\!/_4 * \boldsymbol{\Sigma}^{-1}$$

wherein "$\Sigma$" is a covariance matrix given by noise characteristics of the camera and sensors involved into the estimation of the position of the mobile target;

$$\boldsymbol{\omega}_1 = \begin{pmatrix} \omega_{1x} \\ \omega_{1y} \end{pmatrix},$$

- wherein an autovector $\omega_1$ of matrix $\Phi$, given by expresses the main direction of uncertainty of the uncertainty associated to the determination of the position of the mobile target with respect to the Global Reference System.

According to the invention, the following algorithm is used for determining the optimum position of the aircraft:

$$\begin{bmatrix} x_w \\ y_w \\ z_w \end{bmatrix} = \begin{bmatrix} x_t \\ y_t \\ z_t \end{bmatrix} + \mu * \overrightarrow{\boldsymbol{\Psi}_G}$$

- where "$x_w$", "$y_w$", "$z_w$" are the coordinates of the optimum position of the aircraft;

$$\overrightarrow{\boldsymbol{\Psi}_G} = \begin{bmatrix} \psi_x \\ \psi_y \\ \psi_z \end{bmatrix},$$

- where $\overrightarrow{\Psi_G}$ is a vector, given by pointing from the aircraft towards the mobile target and expressed in coordinates of the Global Reference System, wherein $\overrightarrow{\Psi_G}$ is obtained by the expression:

$$\overrightarrow{\boldsymbol{\Psi}_G} = \begin{bmatrix} \psi_x \\ \psi_y \\ \psi_z \end{bmatrix} = \begin{bmatrix} 0 & \sin\theta & \cos\theta \\ 1 & 0 & 0 \\ 0 & \cos\theta & -\sin\theta \end{bmatrix} * \begin{bmatrix} \sin\alpha_w & \cos\alpha_w & 0 \\ \cos\alpha_w & -\sin\alpha_w & 0 \\ 0 & 0 & -1 \end{bmatrix} * \overrightarrow{\boldsymbol{\Psi}_C}$$

- $\overrightarrow{\Psi_C}$ being a vector which, in coordinates of the reference system of the camera, points from the aircraft towards the mobile target, and which is given by the expression:

$$\vec{\Psi_c} = \frac{1}{s} * \begin{bmatrix} \dfrac{1}{\alpha_u} & \dfrac{-\gamma}{\alpha_u * \alpha_v} & \dfrac{\gamma * v_0}{\alpha_u * \alpha_v} - \dfrac{u_0}{\alpha_v} \\ 0 & \dfrac{1}{\alpha_v} & \dfrac{-v_0}{\alpha_v} \\ 0 & 0 & 1 \end{bmatrix} * \begin{bmatrix} u_t \\ v_t \\ 1 \end{bmatrix}$$

- where the definitions of the terms in the previous equation have been previously given;
- where $\mu$ is a coefficient given by the expression:

$$\mu = \frac{z_\pi}{\psi_z}$$

- where "$z_\pi$" is a predetermined height over the mobile target at which the mobile target remains observable by the aircraft, which may be computed as the area of the target on ground divided by the camera IFOV (Instantaneous Field of Vision);
- where "$\psi_z$" is the z-component of the vector $\vec{\Psi_G}$.

By means of imposing a value for the yaw angle, $\alpha_w$, given by:

$$\alpha_w = \frac{\pi}{2} - \arctan\left(-\frac{\omega_{1x}}{\omega_{1y}}\right)$$

the area of uncertainty associated to the determination of the coordinates of the mobile target with respect to the Global Reference System is minimized, when the aircraft monitors the mobile target from the optimum position.

According to the method underlying the present disclosure, the real-time position of all the aircrafts which comprise a fleet of aircrafts may be taken into account (by means of flying sensors) by the rest of aircrafts in the fleet in which the present method is implemented, such that each aircraft knows, in real-time, the position of the rest of the aircrafts of the fleet, such that when efficiently tracking/monitoring the mobile target, the aircraft, which preferably moves to the optimum position is the aircraft which, at a given moment, is closer or can more easily move to the optimum position.

The method underlying the present disclosure may also take into account the characteristics of the aircraft (such as the maximum velocity of the aircraft). The characteristics of the aircraft may also include those prone to change during the course of a mission tracking a mobile target, such as the instantaneous fuel level available in said aircraft.

The maximum velocity of the aircraft and the instantaneous fuel level of the aircraft may be measured and taken into account for allocating to each aircraft, missions for tracking mobile targets and for having an aircraft return to a base to refuel when necessary.

When it is detected that, due to its characteristics, an aircraft is not in a condition to optimally track the target, the method envisages that another aircraft from the fleet moves and tracks the mobile target while the aircraft, which is not in adequate condition, returns to the base and the existing problems are resolved.

Also according to a possible embodiment of the method, the method also includes:

- determining the size of the mobile target by means of an algorithm which measures the apparent size of the mobile target in the camera image and translates said apparent size into an actual estimated size;

- determining the color of the mobile target, and;

- determining the velocity of the mobile target.

The method may also include the allocation of a vector $\vec{b_k(t)}$, to each mobile target, "k", wherein said vector comprises information relating to the weight, color, class, position and velocity of the mobile target.

According to a possible embodiment of the method, the optimum position of the aircraft may alternatively be selected between points belonging to lines parallel or perpendicular to main axes which cross the area of uncertainty associated to the determination of the position of the mobile target with respect to the Global Reference System.

The present disclosure also refers to a system for positioning aircrafts, wherein the system includes at least one camera mounted on an aircraft and at least one microcontroller unit connected to the camera, wherein the microcontroller unit is configured for calculating an optimum position for an aircraft based on analyzing images of mobile targets taken by the camera, wherein the microcontroller unit analyses the images of mobile targets according to a method as described above. The microcontroller unit may be connected to an aircraft's autopilot, wherein the microcontroller unit may be configured for instructing the aircraft's autopilot for flying the aircraft towards the determined/calculated optimum position for the aircraft.

The microcontroller unit may also be connected to a human-machine interface, and the microcontroller unit may be configured to send instructions to the human-machine interface, these instructions including information on the determined optimum position for the aircraft.

The present disclosure also refers to a computer readable medium including instructions which, when executed by a computer, cause the computer to carry out the method described above.

## BRIEF DESCRIPTION OF THE FIGURES

The method underlying the present disclosure may be understood more readily by viewing the following figures which are depicted in an explanatory and non-limiting manner.

Figure 1: Schematically represents the tracking of a mobile target by the aircraft according to the method underlying the present disclosure.

Figure 2: Schematically represents the tracking of a mobile target by a fleet formed of two aircrafts according to the method underlying the present disclosure.

Figure 3: Global reference system {G}. The $\hat{x}$ axis points to the east and the $\hat{y}$ axis towards the north, while the $\hat{z}$ axis is aligned with the segment which runs from the center of the Earth to the position of the vehicle.

Figure 4: Reference system {U} associated with the aircraft. The $\hat{x}$ axis points forwards, while the $\hat{z}$ axis points downwards (the $\hat{y}$ axis is given by the right-hand rule).

Figure 5: Reference system {C} of the camera on-board the aircraft. The plane of the image with the axes "u" and "v" is also represented in this figure. The $\hat{z}$ axis points forwards and is aligned with the axis of the camera. The $\hat{x}$ and $\hat{y}$ axes coincide respectively with the axes "u" and "v" of the plane of the image. These axes "u" and "v" have directions determined by the electronic sensor which captures the images in the interior of the camera.

## DETAILED DESCRIPTION

The present disclosure relates, as mentioned previously, to a method for positioning aircrafts 1 based on analyzing images of mobile targets 2.

The method underlying the present disclosure provides a strategy for aerial tracking of mobile targets 2 by aircrafts 1 capable of remaining suspended in the air around a fixed position, such as helicopters; the method mathematically determines an optimum position of the aircraft 1 which ensures that the mobile target 2 is permanently monitored by a camera 3 installed in the aircraft 1 (i.e. that aircraft's own fuselage does not obstruct the detection of the mobile target by sensors and aircraft's onboard camera), and with the least possible uncertainty in the determination of the coordinates of the mobile target with respect to a Global Reference System.

The method underlying the present disclosure is preferably implemented in unmanned aircrafts 1 such that it allows managing the tracking and monitoring of mobile targets 2 during tracking missions assigned to an aircraft 1 or a fleet of aircrafts 1, in an independent manner and without any operator intervening from outside of the aircraft 1 itself.

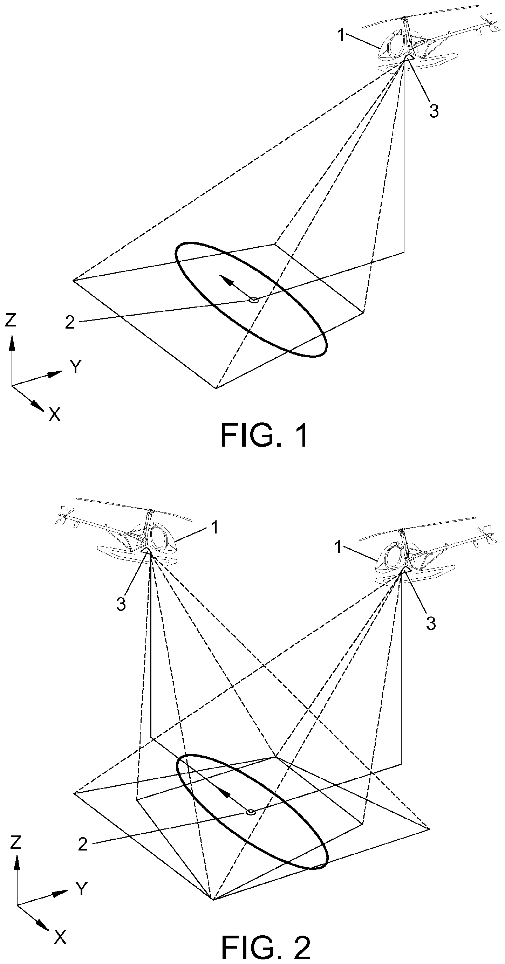

Figures 1 and 2 respectively show a schematic representation of the tracking of a mobile target 2 by an aircraft 1 or by a fleet of two aircrafts 1 in which the method for positioning aircrafts 1 underlying the present disclosure is implemented.

In the description of the method, vectors expressed in different reference systems are used as well as rotation and transformation matrices between different reference systems. Let us consider two reference systems {A} and {B} with the same origin of coordinates and with standard bases $\{\hat{i},\hat{j},\hat{k}\}$ and $\{\hat{i}',\hat{j}',\hat{k}'\}$ respectively. A vector $\vec{v}$ expressed in the reference system {A} is represented as $\vec{v}_A$. The same vector $v$ may also be expressed in the system {B} as:

$$\vec{v}_B = R_B^A \vec{v}_A,$$

where $R_B^A$ is the rotation matrix from the reference system {A} to the reference system {B}, which may be calculated from the standard bases previously mentioned as

$$R_B^A = \begin{bmatrix} \hat{i} \cdot \hat{i}' & \hat{j} \cdot \hat{i}' & \hat{k} \cdot \hat{i}' \\ \hat{i} \cdot \hat{j}' & \hat{j} \cdot \hat{j}' & \hat{k} \cdot \hat{j}' \\ \hat{i} \cdot \hat{k}' & \hat{j} \cdot \hat{k}' & \hat{k} \cdot \hat{k}' \end{bmatrix}.$$

If free vectors are used, it is sufficient to only consider the rotations of the reference systems, but if position vectors are used, the translation from the origin of the reference system must also be considered, when transforming between different reference systems. If the origins of the reference systems {A} and {B} are different, said translation must be considered to transform vectors. $\vec{t}_A$ is the translation vector from the origin of {A} to the origin of {B} expressed in the system {A}. Transformation matrix $T_A^B$ allows a vector expressed in the reference system {B} to be transformed to the reference system {A} by means of the expression:

$$\begin{bmatrix} \vec{v}_A \\ 1 \end{bmatrix} = T_A^B \begin{bmatrix} \vec{v}_B \\ 1 \end{bmatrix} = \begin{bmatrix} R_A^B & \hat{t}_A \\ 0\,0\,0 & 1 \end{bmatrix} \begin{bmatrix} \vec{v}_B \\ 1 \end{bmatrix}.$$

According to a preferred embodiment of the method underlying the present disclosure for positioning aircrafts 1 based on analyzing images of mobile targets 2, the optimum position of an aircraft 1 for tracking a mobile target 2 is a position from which the mobile target 2 remains in a principal position (e.g. the center of the image) of the field of vision of the camera 3 with which said aircraft 1 is fitted. The camera 3 may either be a fixed camera 3 relative to the aircraft 1, without independent motion control, or either a movable camera 3, provided that the relative orientation of said camera 3 with respect to the aircraft 1 be known at any position thereof.

Given that within a determined tracking mission formed of one aircraft 1 or of a fleet of aircrafts 1, there may exist more than one mobile target 2, the present method envisages the identification of each mobile target 2 by their characteristics of shape, color, velocity, such that a determined state vector "$\vec{b}$", may be assigned to each mobile target 2, said state vector defining the characteristics of the mobile targets 2, thus the aircrafts 1 being capable of distinguishing the different mobile targets 2 which may exist. The characteristics of each mobile target 2 are measured by the conventional perception systems which exist in the aircraft 1.

If, for example, a determined mobile target, "k", is assumed with an associated state vector, $\overrightarrow{b_k(t)}$, said state vector comprises the cinematic characteristics of the mobile target "k" such as its position and velocity and a series of characteristics called "static characteristics" of the mobile target "k", and which comprise the classification of the mobile target "k", into a predetermined class, the color or size of said mobile target "k". Said state vector is mathematically expressed as follows:

$$\overrightarrow{b_k}(t) = \begin{bmatrix} p_k(t) \\ \dot{p}_k(t) \\ \theta_k \end{bmatrix}$$

where $p_k$ and $\dot{p}_k$ are respectively the position and velocity vectors of the mobile target "k" and $\theta_k$ is the static characteristics vector of the mobile target, "k".

For a tracking mission in which there is a plurality, "N" of mobile targets "k", there is one state vector $B(t) = [\overrightarrow{b_1}(t) \ldots \overrightarrow{b_k}(t) \ldots \overrightarrow{b_N}(t)]$, which comprises the states of each one of the mobile targets, "k", given a number "N" of mobile targets.

The information regarding the state of each one of the mobile targets 2 is inferred from the measurements taken by the perception systems of all the aircrafts 1 of the fleet. Based on the state of each mobile target 2, the optimum position of the aircraft 1 for tracking said mobile target 2 is determined, such that said mobile target 2 may be maintained in the center of the camera 3 image.

The uncertainty in the estimation of the state of a mobile target 2 is used to generate an "uncertainty area", within which the mobile target 2 must be located. Said uncertainty area associated to the position, $p_k(t)$ of a determined mobile target, "k", has an associated covariance matrix, $\Sigma$, which may be expressed mathematically as an ellipsoid whose semi-axes have a typical standard deviation, 3o, of the estimation of the position of said mobile target 2. The covariance matrix $\Sigma$ is computed based on the noise characteristics of all the sensors and, eventually, also on the methods involved into the estimation of the target position: vehicle GPS position, vehicle orientation, uncertainty of the target detection into the images, relative position of the camera with respect the vehicle, etc.

The covariance matrix $\Sigma$ is a conventional term which is given when using instruments which are subjected to certain errors and tolerances in their measurements/estimations.

Based on the above, a quadric or ruled space is defined for expressing the uncertainty area associated to the position of the mobile target 2, said quadric being mathematically expressed as follows:

$$x^T * Q * x + p * x + r = 0$$

where:

$$x = \begin{bmatrix} x \\ y \\ z \end{bmatrix}$$

$$Q = \begin{bmatrix} q_{11} & q_{12} & q_{13} \\ q_{21} & q_{22} & q_{23} \\ q_{31} & q_{32} & q_{33} \end{bmatrix}$$

$$p = \begin{bmatrix} p_1 \\ p_2 \\ p_3 \end{bmatrix}$$

and "r" is a constant. All of these terms are inherent to the conventional equation which mathematically defines a quadric. If said quadric is an ellipsoid, the condition $\det(Q) > 0$ is set on the determinant of the matrix $Q$, $Q$ being an invertible matrix.

With the intention of extracting useful characteristics from the previous ellipsoid, such as the directions and modules of the main axes of the ellipsoid, the previous general form may be expressed in the following manner with reference to the center of the ellipsoid:

$$(x - k)^T * RDR^T * (x - k) = 1$$

where $k$ is the center of the ellipsoid, $R$ represents a rotation and $D$ is a diagonal matrix.

Including the center of the ellipsoid, $k$, in the general expression $x^T * Q * x + p x + r = 0$, gives:

$$(x - k)^T * Q * (x - k) = x^T * Q * x - 2 * k^T * Q * x + k^T * Q * k$$

$$= (x^T * Q * x + p^T * x + r) - (2 * Q * k + p)^T * x + (k^T * Q * k - r)$$

$$= -(2 * Q * k + p)^T * x + (k^T * Q * k - r).$$

Based on the above, the following is obtained:

$$k = -Q^{-1} * {}^p\!/_2$$

which can consequently be written:

$$k^T * Q * k = p^T * Q^{-1} * {}^p\!/_4$$

from which is obtained:

$$(x - k)^T * Q * (x - k) = p^T * Q^{-1} * P/4 - r$$

Dividing between the scalar *r* at the right side of the previous equation and denoting:

$$\Phi = \frac{Q}{(p^T * Q^{-1} * P/4 - r)}$$

gives:

$$(x - k)^T * \Phi * (x - k) = 1$$

Lastly, the symmetric matrix of the quadric, $\Phi$, may be factorized using an eigenvalue decomposition in the following manner: $\Phi = R * D * R^T$, where $R$ is a rotation matrix and $D$ is the diagonal matrix, the main diagonal of which is made up of positive factors.

Given that the terrain, on which the mobile target 2 lies, is known by means of any GIS database, only the uncertainty in the (x-y) plane (horizontal plane) must be considered. For two dimensions, the eigenvalue decomposition may be carried out analytically and allows the eigenvectors to be obtained and therefore the directions of the main axes of the corresponding ellipse.

An eigenvector $\omega$ of $\Phi$ with an associated eigenvalue "λ", is a non-null vector such that:

$$\Phi * \omega = \lambda * \omega$$

The eigenvalues are obtained from the solutions of the second grade equation coming from:

$$\det(\Phi - \lambda * I) = 0$$

where

$$\Phi = \begin{pmatrix} \varphi_{11} & \varphi_{12} \\ \varphi_{21} & \varphi_{22} \end{pmatrix}$$

from where:

$$\lambda_{1,2} = \frac{(\varphi_{11} + \varphi_{22}) \pm \sqrt[2]{(\varphi_{11} - \varphi_{22})^2 + 4 * \varphi_{12}^2}}{2}$$

By definition, the eigenvalues allow the following to be expressed:

$$\Phi * \omega_1 = \lambda_1 * \omega_1$$

$$\Phi * \omega_2 = \lambda_2 * \omega_2$$

Below, the two previous equations are rewritten together using the matrix: $R = [\omega_1 \ \omega_2]$, the columns of which are the eigenvectors of unitary length.

The equation written together reads as follows:

$$\Phi * R = R * D$$

where:

$$D = diag(\lambda_1; \lambda_2)$$

Multiplying the right side of the previous equation by the matrix $R^T$, the decomposition is obtained:

$$\Phi = R * D * R^T$$

Each one of the aircrafts 1 periodically calculates the covariance matrix, $\Sigma_k$, associated with the area of uncertainty of each mobile target "k" based on the computed estimations.

The matrix $\Phi$ which describes the shape of the ellipse according to the equation:

$$(x - k)^T * \Phi * (x - k) = 1$$

is associated with the covariance matrix of said ellipse as expressed in the following equation:

$$\Phi = {}^1\!/_4 * \Sigma^{-1}$$

Based on the previous equation, it is possible to calculate the direction of the main axis of the ellipse, that is, the direction with greatest associated uncertainty in the estimation of the position of the mobile target 2. Additionally, the orientation of the axes of the uncertainty ellipse can change dynamically as the estimation changes with newly acquired information.

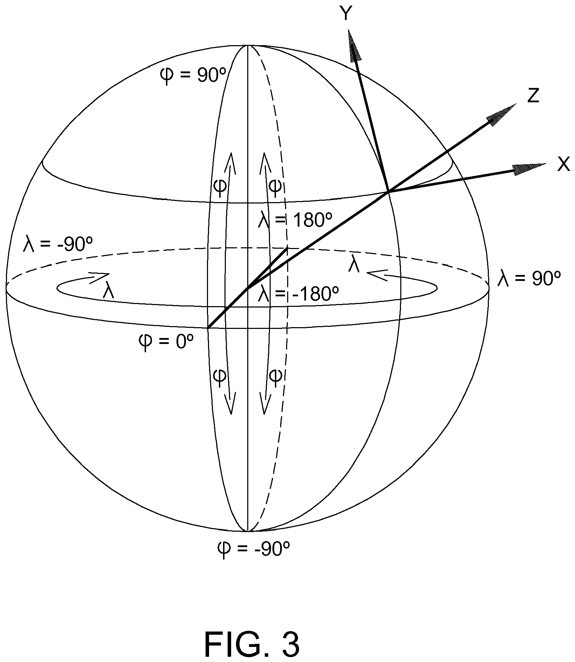

Considering a mobile target 2 whose position is given by $\vec{M}_t = \begin{bmatrix} x_t \\ y_t \\ z_t \end{bmatrix}$ in the global reference system {G} (see Figure 3), and where the vector which defines the main direction of uncertainty in the (x-y) plane of the ellipsoid is given by $\omega_1 = \begin{bmatrix} \omega_{1x} \\ \omega_{1y} \end{bmatrix}$, the task consists of calculating the optimum position and the orientation of the aircraft 1 which allows the estimation of the position of said mobile target 2 to be improved, reducing the uncertainty in determining the position and therefore allowing improved tracking of the mobile target 2.

For establishing the Global Reference System, there are many different known solutions; one possible solution is employing the coordinates of the Universal Transverse Mercator (UTM).

The coordinates of the optimum position are denoted by: $\vec{M}_w = \begin{bmatrix} x_w \\ y_w \\ z_w \end{bmatrix};$ and the desired orientation of the aircraft 1 into said optimum position is defined by its roll ($\gamma_w$), pitch ($\beta_w$) and yaw ($\alpha_w$) angles.

The initial location of the aircraft 1 is given by $\begin{bmatrix} x_0 \\ y_0 \\ z_0 \end{bmatrix}.$

Generally, $\vec{M}_w = \begin{bmatrix} x_w \\ y_w \\ z_w \end{bmatrix}$ and roll ($\gamma_w$), pitch ($\beta_w$) and yaw ($\alpha_w$) angles at the optimum location are calculated given an estimated target position $M_t$ and its associated uncertainty.

The method underlying the present disclosure comprises determining coordinates, "$u_t$" and "$v_t$", for the pixel of the image obtained by the camera 3 which depicts the mobile target 2, for which the real coordinates are given by:

$$\overrightarrow{\boldsymbol{M}}_t = \begin{bmatrix} x_t \\ y_t \\ z_t \end{bmatrix},$$ in the Global Reference System.

Coordinates "$u_t$" and "$v_t$" of the image of the camera 3 are expressed as a function of coordinated axes, "u", "v", of the camera 3 image.

Below, a bidimensional vector containing the coordinates of said pixel is defined:

$$\overrightarrow{\boldsymbol{m}}_t = \begin{bmatrix} u_t \\ v_t \end{bmatrix}$$

As has already been mentioned, definition of the vector $\overrightarrow{m}_t$ falls within the scope of conventional images analysis, which does not form part of the present disclosure.

Transformed vectors, $\widetilde{m}$ and $\widetilde{M}$, are respectively assigned to the vectors $\overrightarrow{m}_t$ and $\overrightarrow{M}_t$, in the following manner:

$$\widetilde{\boldsymbol{m}} = \begin{bmatrix} u_t \\ v_t \\ 1 \end{bmatrix}$$

$$\widetilde{\boldsymbol{M}} = \begin{bmatrix} x_t \\ y_t \\ z_t \\ 1 \end{bmatrix}$$

According to conventional modelization of the cameras (3), the relation between one point of Cartesian 3D space at which the mobile target (2) is located and its projection onto the image obtained by the camera (3), is expressed in terms of the transformed vectors, $\widetilde{m}$ and $\widetilde{M}$, by means of the following equation:

$$s * \widetilde{\boldsymbol{m}} = \boldsymbol{C} * \boldsymbol{T}_C^G * \widetilde{\boldsymbol{M}} = \boldsymbol{C} * [\boldsymbol{R}_C^G \quad \hat{\boldsymbol{t}}_C] * \widetilde{\boldsymbol{M}}$$

where "s" is known as the "scale factor" whose value is fixed as a function of the relative position of the camera 3 and the mobile target 2 and the parameters of the camera (3). In particular, it can be computed as:

$$s = (D_t - f)/f$$

where "f" is the focal length of the camera and $D_t$ is the distance from the camera to the target. This distance can be measured with a telemeter on-board the aircraft pointing at the target.

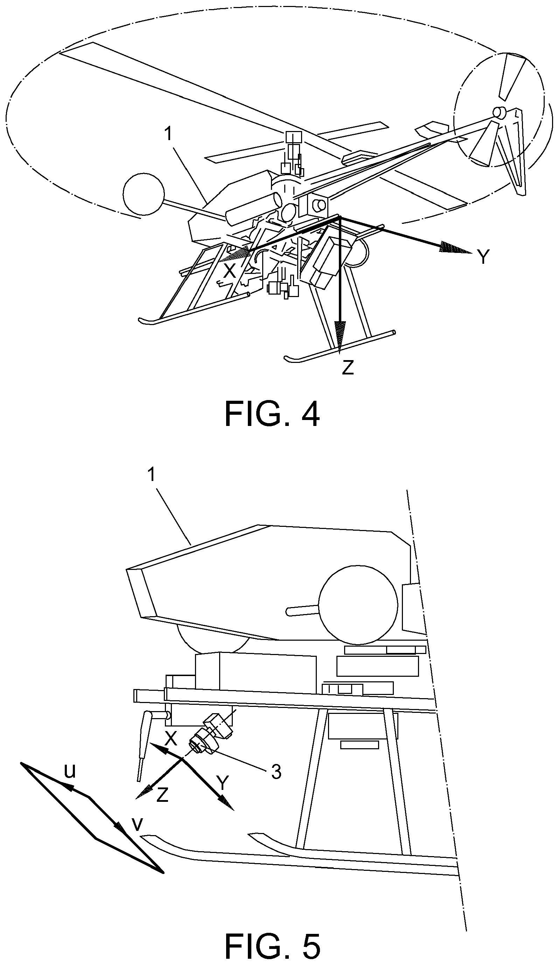

The term $\boldsymbol{T}_C^G$ of the previous equation is a conventional transformation matrix (rotation and translation) for passing from the reference system {G} of the global coordinates to the local reference system {C} (see Figure 5) of the camera 3.

The term "$\boldsymbol{C}$" of the previous equation is a matrix called an "intrinsic matrix" of the camera 3 and is defined by means of the following expression:

$$\boldsymbol{C} = \begin{bmatrix} \alpha_u & \gamma & u_0 \\ 0 & \alpha_v & v_0 \\ 0 & 0 & 1 \end{bmatrix}$$

where "$u_0$" and "$v_0$" are the coordinates of the central point of the image obtained by the camera 3; "$\alpha_u$" and "$\alpha_v$" are the scaling factors of the axes, "u", "v", of the camera 3 image, and; "$\gamma$" is a parameter which defines the orthogonality (or skewness) between the axes, "u", "v", of the plane of the camera 3 image.

Below, a free vector, $\overrightarrow{\Psi_c}$, defining the direction pointing from the current location of the aircraft 1 towards the position of the mobile target 2 is introduced, based on the transformed vector, $\widetilde{m}$ which contains the coordinates,

$$\overrightarrow{m}_t = \begin{bmatrix} u_t \\ v_t \end{bmatrix},$$ of the pixel in the camera 3 image depicting the mobile target 2. This vector $\overrightarrow{\Psi_c}$ is expressed in the local reference system of the camera 3.

$$\overrightarrow{\Psi_c} = \frac{1}{s} * C^{-1} * \begin{bmatrix} u_t \\ v_t \\ 1 \end{bmatrix} = \frac{1}{s} * \begin{bmatrix} \dfrac{1}{\alpha_u} & \dfrac{-\gamma}{\alpha_u * \alpha_v} & \dfrac{\gamma * v_0}{\alpha_u * \alpha_v} - \dfrac{u_0}{\alpha_v} \\ 0 & \dfrac{1}{\alpha_v} & \dfrac{-v_0}{\alpha_v} \\ 0 & 0 & 1 \end{bmatrix} * \begin{bmatrix} u_t \\ v_t \\ 1 \end{bmatrix}$$

where by operating, it leads to the following:

$$\overrightarrow{\Psi_c} = \frac{1}{s} * \begin{bmatrix} \dfrac{v_t - v_0}{\alpha_v} \\ \dfrac{u_t}{\alpha_v} - \dfrac{u_0}{\alpha_v} - \gamma * \dfrac{v_t - v_0}{\alpha_u * \alpha_v} \\ 1 \end{bmatrix}$$

Below, a new vector, $\overrightarrow{\Psi_G}$, is defined which is obtained from expressing the vector $\overrightarrow{\Psi_c}$ in coordinates of the global reference system {G} passing through the reference system of the aircraft {U} (see Figure 4):

$$\overrightarrow{\Psi_G} = \begin{bmatrix} \psi_x \\ \psi_y \\ \psi_z \end{bmatrix} = R_U^C * R_G^U * \overrightarrow{\Psi_C}$$

Computing vector $\overrightarrow{\Psi_G}$ allows the following parametric equation of the rays of light captured by the camera 3 to be expressed, an equation which associates the position of a mobile target 2, $\overrightarrow{M}_t$, in the global reference system {G} with the direction pointing from the current location of the aircraft 1 towards the position of the mobile target 2, $\overrightarrow{\Psi_G}$, also expressed in the global reference system {G} in the following manner:

$$\begin{bmatrix} x_w \\ y_w \\ z_w \end{bmatrix} = \begin{bmatrix} x_t \\ y_t \\ z_t \end{bmatrix} + \mu * \overrightarrow{\Psi_G}$$

The previous parametric equation of a line in the Cartesian 3D space allows calculating a set of optimum positions, $\begin{bmatrix} x_w \\ y_w \\ z_w \end{bmatrix}$, from which an aircraft 1 may track a mobile target 2 located at a position in space, $\overrightarrow{M}_t = \begin{bmatrix} x_t \\ y_t \\ z_t \end{bmatrix}.$ In order to fix a solution from the set defined by the parametric equation above, additional constraints may be imposed.

Below, an example of additional constraints is provided to compute a particular optimum observation position from the set defined by the parametric line equation above. The constraints are set out with respect to the position of the aircraft 1, the camera 3 and the mobile target 2. Said restrictions are set out depending on each case and are updated in real time.

For a sample case, the restrictions may be as follows:

- the mobile target 2 must remain observable by the aircraft's camera 3, for example, it may be imposed that, in the optimum position, the mobile target 2 remains in the center of the camera image 3, that is, for a resolution of "$w *$ $h$" pixels, $$\overrightarrow{m}_t = \begin{bmatrix} w/2 \\ h/2 \end{bmatrix};$$

- the flight altitude of the aircraft 1 must be $z_w = z_t + z_\pi$, where $z_\pi$ can be computed based on the instantaneous field of view (IFOV) of the camera 3 and the size of the mobile target 2 following the next heuristic rule: $z_\pi$ is equal to the area of the target on ground divided by the camera IFOV;
- the camera 3 is aligned with the plane of symmetry of the aircraft 1 and inclined an angle θ with respect to the fuselage of the aircraft 1;

- the yaw angle, $\alpha_w$, of the aircraft 1 is calculated for maintaining the aircraft 1 focused on the mobile target 2, in a direction perpendicular to the main axis, defined by $\omega_1 = \begin{bmatrix} \omega_{1x} \\ \omega_{1y} \end{bmatrix}$, of the ellipse of uncertainty while the roll and pitch angles are cancelled to simplify ($\gamma_w = \beta_w = 0$).

This value for the yaw angle, $\alpha_w$, may be given by:

$$\alpha_w = \frac{\pi}{2} - \tan^{-1}\left( -\frac{\omega_{1x}}{\omega_{1y}} \right)$$

using the north as zero reference for the yaw angle and assuming clockwise positive.

As $z_w = z_t + z_\pi$, then $\mu = {z_\pi}/{\psi_z}$, and the parametric equation previously cited is expressed in the following manner for the exemplary case described:

$$\begin{bmatrix} x_w \\ y_w \\ z_w \end{bmatrix} = \begin{bmatrix} x_t + (z_\pi) * \dfrac{\psi_x}{\psi_z} \\ y_t + (z_\pi) * \dfrac{\psi_y}{\psi_z} \\ z_t + z_\pi \end{bmatrix}$$

where the components $\psi_x$, $\psi_y$ and $\psi_z$ of the vector $\overrightarrow{\Psi_G}$, are determined according to the equations already described, provided that vector $\overrightarrow{m_t} = \begin{bmatrix} {w}/{2} \\ {h}/{2} \end{bmatrix}$ and the rotation matrices $R_G^U$ and $R_U^C$ used for expressing the vector $\overrightarrow{\Psi_C}$ in terms of the global coordinates {G} are known. In particular, for the previously mentioned case of a camera 3 aligned with the plane of symmetry of the aircraft 1 and inclined at an angle θ with respect to the fuselage of the aircraft 1:

$$R_U^C = \begin{bmatrix} 0 & \sin\theta & \cos\theta \\ 1 & 0 & 0 \\ 0 & \cos\theta & -\sin\theta \end{bmatrix},$$

and on the other hand for the previous case of null roll and pitch angles, and a yaw angle $\alpha_w$:

$$R_G^U = \begin{bmatrix} \sin\alpha_w & \cos\alpha_w & 0 \\ \cos\alpha_w & -\sin\alpha_w & 0 \\ 0 & 0 & -1 \end{bmatrix}.$$

As mentioned, Figure 1 shows an example of an optimum position and orientation for an aircraft 1, calculated according to the rules previously described. If there is a fleet of aircrafts 1 composed of two or more aircrafts 1, one of the aircrafts 1 calculates the optimum position at which it must be located to optimally track the mobile target 2 according to the rules previously described, while the rest of the aircrafts 1 consider possible locations not yet occupied by other aircrafts 1.

In this last case, the location of each of the aircrafts 1 is alternatively selected between the lines perpendicular and parallel to the main axis which crosses the uncertainty area associated to the position of the mobile target 2.

As observed in Figure 2, if two aircrafts 1 have a mission to track the same mobile target 2, one of the two aircrafts 1 chooses the closest position on the line perpendicular to the main axis, while the other aircraft 1 chooses the closest position on the line parallel to the main axis of the uncertainty area associated to the position of the mobile target 2.

The calculated optimum position of the aircraft 1 is such that the area of uncertainty in the estimation of the position of the mobile target 2 is minimized, when tracking the mobile target 2 from said calculated optimum position of the aircraft 1.

Regarding the allocation of many possible different mobile targets 2 to different aircrafts 1, this problem is similar to the well-known "Vehicle Routing Problem" and can be solved with any of the usual existing techniques in the literature.

**Claims**

1.   A method for positioning aircrafts (1) based on analyzing images of mobile targets (2) comprising the following steps:

> a. identifying at least one mobile target (2) by means of at least one image obtained by means of at least one camera (3) mounted on at least one aircraft (1);
> b. determining, by means of internal sensors of the at least one aircraft, the coordinates of the at least one aircraft with respect to a Global Reference System;
> c. determining coordinates of the at least one mobile target with respect to the Global Reference System;
> d. generating an area of uncertainty associated to the determination of the coordinates of the at least one mobile target with respect to the Global Reference System;
> e. determining an optimum position of the at least one aircraft from which to monitor the at least one mobile target (2) in such a way that the area of uncertainty associated to the determination of the coordinates of the at least one mobile target with respect to the Global Reference System is minimized, and;
> f. moving the aircraft (1) to the optimum position;
> **characterized in that**
> the following algorithm is used for determining the optimum position of the at least one aircraft (1):

$$\begin{bmatrix} x_w \\ y_w \\ z_w \end{bmatrix} = \begin{bmatrix} x_t \\ y_t \\ z_t \end{bmatrix} + \mu * \overrightarrow{\Psi_G}$$

> - where $x_w$, $y_w$, $z_w$ are the coordinates of the optimum position of the at least one aircraft (1);

$$\overrightarrow{\Psi_G} = \begin{bmatrix} \psi_x \\ \psi_y \\ \psi_z \end{bmatrix},$$

> - where $\overrightarrow{\Psi_G}$ is a vector, given by $\begin{bmatrix} \psi_x \\ \psi_y \\ \psi_z \end{bmatrix}$ pointing from the at least one aircraft towards the at least one mobile target and expressed in coordinates of the Global Reference System, wherein $\overrightarrow{\Psi_G}$ is obtained by the expression:

$$\overrightarrow{\Psi_G} = \begin{bmatrix} \psi_x \\ \psi_y \\ \psi_z \end{bmatrix} = \begin{bmatrix} 0 & \sin\theta & \cos\theta \\ 1 & 0 & 0 \\ 0 & \cos\theta & -\sin\theta \end{bmatrix} * \begin{bmatrix} \sin\alpha_w & \cos\alpha_w & 0 \\ \cos\alpha_w & -\sin\alpha_w & 0 \\ 0 & 0 & -1 \end{bmatrix} * \overrightarrow{\Psi_C}$$

> - $\overrightarrow{\Psi_C}$ being a vector which, in coordinates of the reference system of the camera, points from the at least one aircraft towards the at least one mobile target, and which is given by the expression:

$$\overrightarrow{\Psi_c} = \frac{1}{s} * \begin{bmatrix} \dfrac{1}{\alpha_u} & \dfrac{-\gamma}{\alpha_u * \alpha_v} & \dfrac{\gamma * v_0}{\alpha_u * \alpha_v} - \dfrac{u_0}{\alpha_v} \\ 0 & \dfrac{1}{\alpha_v} & \dfrac{-v_0}{\alpha_v} \\ 0 & 0 & 1 \end{bmatrix} * \begin{bmatrix} u_t \\ v_t \\ 1 \end{bmatrix}$$

- where s, is a predetermined coefficient whose value is:

$$s = \frac{D_t - f}{f}$$

- where, f, is a focal length of the camera (3);
- where $u_0$ and $v_0$ are the coordinates of the central point of the camera image;
- where $\alpha_u$ and $\alpha_v$ are scaling factors applied to the axes, u, v, of the camera image;
- $\gamma$ is a parameter which defines the orthogonality between the axes, u, v, of the plane of the camera image;
- where $\mu$ is a coefficient given by the expression:

$$\mu = \frac{z_\pi}{\psi_z}$$

- where $z_\pi$ is a predetermined height over the at least one mobile target (2) at which the at least one mobile target remains observable;
- where $\psi_z$ is the z-component of the vector $\overrightarrow{\Psi_G}$, and;
- wherein, by means of imposing a value for the yaw angle, $\alpha_w$, given by:

$$\alpha_w = \frac{\pi}{2} - \arctan\left(-\frac{\omega_{1x}}{\omega_{1y}}\right)$$

the area of uncertainty associated to the determination of the coordinates of the at least one mobile target with respect to the Global Reference System is minimized, when the at least one aircraft (1) monitors the at least one mobile target (2) from the optimum position.

2. The method for positioning aircrafts based on analyzing images of mobile targets according to claim 1, wherein determining the coordinates of the at least one mobile target with respect to the Global Reference System comprises:

a. determining, by means of at least one sensor mounted on the at least one aircraft (1), the distance, $D_t$, existing between the at least one aircraft (1) and the at least one mobile target (2);
b. determining the coordinates, $u_t$, $v_t$, of the at least one mobile target (2) with respect to axes, u, v, of the camera image;
c. determining the angle, $\theta$, of the camera with respect to fuselage of the at least one aircraft (1);
d. determining, by means of at least one sensor mounted on the at least one aircraft (1), the orientation of the at least one aircraft (1) with respect to the Global Reference System, wherein the orientation of the at least one aircraft (1) with respect to the Global Reference System is given by means of at least a yaw angle $\alpha_w$ of the aircraft (1), and;
e. applying an algorithm to transform the coordinates, $u_t$, $v_t$, of the at least one mobile target (2) within the camera image, into the coordinates, $x_t$, $y_t$, $z_t$, of the at least one mobile target (2) with respect to the Global Reference System.

3. The method for positioning aircrafts based on analyzing images of mobile targets according to claim 2, wherein the following algorithm is used to determine the coordinates of the at least one mobile target (2) with respect to the Global Reference System:

$$s * \widetilde{m} = C * T_C^G * \widetilde{M} = C * [R_C^G \quad \hat{t}_C] * \widetilde{M}$$

$$\widetilde{m} = \begin{bmatrix} u_t \\ v_t \\ 1 \end{bmatrix};$$

- where $\widetilde{m}$ is defined as
- where "s", is a predetermined coefficient whose value is:

$$s = \frac{D_t - f}{f}$$

- where "f" is a focal length of the camera;

$$\widetilde{M} = \begin{bmatrix} x_t \\ y_t \\ z_t \\ 1 \end{bmatrix};$$

- where $\widetilde{M}$ is defined as

- where $T_C^G$ is a rotation and translation matrix for passing from the Global Reference System to a reference system of the at least one aircraft (1), where $T_C^G = [R_C^G \quad \hat{t}_C]$;
- where "$C$" is an intrinsic matrix of the camera defined by:

$$C = \begin{bmatrix} \alpha_u & \gamma & u_0 \\ 0 & \alpha_v & v_0 \\ 0 & 0 & 1 \end{bmatrix}$$

- where $u_0$ and $v_0$ are the coordinates of the central point of the camera image;
- where $\alpha_u$ and $\alpha_v$ are scaling factors applied to the axes, u, v, of the camera image, and;
- $\gamma$ is a parameter which defines the orthogonality between the axes, u, v, of the camera image;
- where $[R_C^G \quad \hat{t}_C]$ is a composed matrix given by:

$$[R_C^G \quad \hat{t}_C] = \begin{bmatrix} R_C^G & \hat{t}_C \\ 000 & 1 \end{bmatrix};$$

- where $\hat{t}_C$ is a translation vector, pointing from origin of the Global Reference System to origin of a reference system of the camera;

- where $R_C^G$ is a rotation matrix among the reference system of the camera (3) and the Global Reference System, which is given by:

$$R_C^G = R_U^C * R_G^U$$

- where $R_U^C$ is a rotation matrix among the reference system of the camera and the reference system of the at least one aircraft, and where $R_G^U$ is a rotation matrix among the reference system of the at least one aircraft (1) and the Global Reference System;
- where, for null roll and pitch angles of the at least one aircraft (1), $R_G^U$ is given by:

$$R_G^U = \begin{bmatrix} \sin \alpha_w & \cos \alpha_w & 0 \\ \cos \alpha_w & -\sin \alpha_w & 0 \\ 0 & 0 & -1 \end{bmatrix},$$

and;
- where, for a camera (3) aligned with a plane of symmetry of the a least one aircraft (1) and inclined at an angle θ with respect to the fuselage of the at least one aircraft (1), $\boldsymbol{R}_U^C$ is given by:

$$\boldsymbol{R}_U^C = \begin{bmatrix} 0 & \sin\theta & \cos\theta \\ 1 & 0 & 0 \\ 0 & \cos\theta & -\sin\theta \end{bmatrix}.$$

4. The method for positioning aircrafts based on analyzing images of mobile targets according to claim 2, wherein the area of uncertainty associated to the determination of the position of the at least one mobile target (2) with respect to the Global Reference System is given by the following mathematical expression of an ellipse in a horizontal surface:

$$(\boldsymbol{x} - \boldsymbol{k})^T * \boldsymbol{\Phi} * (\boldsymbol{x} - \boldsymbol{k}) = 1$$

- where $x$ is a vector, given by $\boldsymbol{x} = \begin{pmatrix} x \\ y \end{pmatrix},$ where x, y, express generic horizontal coordinates in the Global Reference System;

- where $\boldsymbol{k}$ is a vector, given by $\boldsymbol{k} = \begin{pmatrix} x_t \\ y_t \end{pmatrix},$ comprising the coordinates of the center of the ellipse, which are the determined coordinates, $x_t$, $y_t$, of the at least one mobile target with respect to the Global Reference System in a horizontal plane;
- where $\Phi$ is a matrix of coefficients indicating the shape of the ellipse;
- wherein matrix $\Phi$ is calculated based the expression:

$$\boldsymbol{\Phi} = {}^1/_4 * \boldsymbol{\Sigma}^{-1}$$

wherein $\Sigma$ is a covariance matrix given by noise characteristics of the camera (3) and sensors involved into the estimation of the position of the at least one mobile target, and;

- wherein an autovector $\omega_1$ of matrix $\Phi$, given by $\boldsymbol{\omega}_1 = \begin{pmatrix} \omega_{1x} \\ \omega_{1y} \end{pmatrix},$ expresses the main direction of uncertainty of the uncertainty associated to the determination of the position of the at least one mobile target (2) with respect to the Global Reference System.

5. The method for positioning aircrafts based on analyzing images of mobile targets according to claim 1, wherein the maximum velocity of the at least one aircraft (1) and the instantaneous fuel level of the at least one aircraft (1) is measured and taken into account for allocating to each aircraft a mission for tracking at least one mobile target (2) and for having an aircraft (1) return to a base to refuel when necessary.

6. The method for positioning aircrafts based on analyzing images of mobile targets according to claim 1, wherein the method also comprises any combination of one or more of:

- determining the size of the at least one mobile target (2) by means of an algorithm which measures the apparent size of the at least one mobile target in the camera image and translates said apparent size into an actual estimated size;
- determining the color of the at least one mobile target (2);
- determining the velocity of the at least one mobile target (2).

7. The method for positioning aircrafts based on analyzing images of mobile targets according to claim 7, wherein it comprises allocating a vector $\overrightarrow{\boldsymbol{b}_k(t)}$, to each mobile target (2), k, where said vector comprises information relating to the weight, color, class, position and velocity of the mobile target (2).

8. The method for positioning aircrafts based on analyzing images of mobile targets according to claim 1, wherein the optimum position of the at least one aircraft (1) is alternatively selected between points belonging to lines parallel or perpendicular to main axes which cross the area of uncertainty associated to the determination of the position of the at least one mobile target (2) with respect to the Global Reference System.

9. A system for positioning aircrafts (1) which comprises at least one camera (3) mounted on an aircraft (1) and at least one microcontroller unit connected to the camera (3), wherein the at least one microcontroller unit is configured for calculating an optimum position for an aircraft (1) based on analyzing images of mobile targets (2) taken by the at least one camera (3), **characterised in that** the at least one microcontroller unit is configured to analyse the images of mobile targets (2) according to a method as described in any of the preceding claims.

10. The system for positioning aircrafts according to claim 10, wherein the at least one microcontroller unit is connected to an aircraft's autopilot, wherein the at least one microcontroller unit is configured for instructing the aircraft's autopilot for flying the aircraft (1) towards the determined optimum position for the aircraft (1).

11. The system for positioning aircrafts according to claim 10, wherein the at least one microcontroller unit is connected to a human-machine interface, wherein the at least one microcontroller unit is configured to send instructions to the human-machine interface, the instructions comprising information on the determined optimum position for the aircraft (1).

12. A computer readable medium **characterized in that** it comprises instructions which, when executed by a computer, cause the computer to carry out the method according to any of claims 1 to 8.

### Patentansprüche

1. Verfahren zur Positionierung von Flugzeugen (1) auf Grundlage der Analyse von Bildern mobiler Ziele (2), umfassend die folgenden Schritte:

a. Identifizieren mindestens eines mobilen Ziels (2) mittels mindestens eines Bildes, das mittels mindestens einer Kamera (3) erlangt wurde, die an mindestens einem Flugzeug (1) angebracht ist;
b. Bestimmen der Koordinaten des mindestens einen Flugzeugs in Bezug auf ein globales Referenzsystem mittels interner Sensoren des mindestens einen Flugzeugs;
c. Bestimmen von Koordinaten des mindestens einen mobilen Ziels in Bezug auf das globale Referenzsystem;
d. Erzeugen eines Unsicherheitsbereichs im Zusammenhang mit der Bestimmung der Koordinaten des mindestens einen mobilen Ziels in Bezug auf das globale Referenzsystem;
e. Bestimmen einer optimalen Position des mindestens einen Flugzeugs, von der aus das mindestens eine mobile Ziel (2) so überwacht werden kann, dass der Unsicherheitsbereich im Zusammenhang mit der Bestimmung der Koordinaten des mindestens einen mobilen Ziels in Bezug auf das globale Referenzsystem minimiert wird, und;
f. Bewegen des Flugzeugs (1) in die optimale Position;
**dadurch gekennzeichnet, dass**
der folgende Algorithmus zum Bestimmen der optimalen Position des mindestens einen Flugzeugs (1) verwendet wird:

$$\begin{bmatrix} x_w \\ y_w \\ z_w \end{bmatrix} = \begin{bmatrix} x_t \\ y_t \\ z_t \end{bmatrix} + \mu * \overrightarrow{\Psi_G}$$

- wobei $x_w$, $y_w$, $z_w$ die Koordinaten der optimalen Position des mindestens einen Flugzeugs (1) sind;

- wobei $\overrightarrow{\Psi_G}$ ein durch $\overrightarrow{\Psi_G} = \begin{bmatrix} \psi_x \\ \psi_y \\ \psi_z \end{bmatrix}$ gegebener Vektor ist, der von dem mindestens einen Flugzeug auf das mindestens eine mobile Ziel zeigt und in Koordinaten des globalen Referenzsystems ausgedrückt

wird, wobei sich $\overrightarrow{\Psi_G}$ durch den folgenden Ausdruck ergibt:

$$\overrightarrow{\Psi_G} = \begin{bmatrix} \psi_x \\ \psi_y \\ \psi_z \end{bmatrix} = \begin{bmatrix} 0 & \sin\theta & \cos\theta \\ 1 & 0 & 0 \\ 0 & \cos\theta & -\sin\theta \end{bmatrix} * \begin{bmatrix} \sin\alpha_w & \cos\alpha_w & 0 \\ \cos\alpha_w & -\sin\alpha_w & 0 \\ 0 & 0 & -1 \end{bmatrix} * \overrightarrow{\Psi_C}$$

- wobei $\overrightarrow{\Psi_C}$ ein Vektor ist, der in Koordinaten des Referenzsystems der Kamera von dem mindestens einen Flugzeug auf das mindestens eine mobile Ziel zeigt und der durch folgenden Ausdruck gegeben ist:

$$\overrightarrow{\Psi_c} = \frac{1}{s} * \begin{bmatrix} \dfrac{1}{\alpha_u} & \dfrac{-\gamma}{\alpha_u * \alpha_v} & \dfrac{\gamma * v_0}{\alpha_u * \alpha_v} - \dfrac{u_0}{\alpha_v} \\ 0 & \dfrac{1}{\alpha_v} & \dfrac{-v_0}{\alpha_v} \\ 0 & 0 & 1 \end{bmatrix} * \begin{bmatrix} u_t \\ v_t \\ 1 \end{bmatrix}$$

- wobei s ein vorgegebener Koeffizient mit folgendem Wert ist:

$$s = \frac{D_t - f}{f}$$

- wobei f eine Brennweite der Kamera (3) ist;
- wobei $\upsilon_0$ und $v_0$ die Koordinaten des Mittelpunkts des Kamerabildes sind;
- wobei $\alpha_\upsilon$ und $\alpha_v$ Skalierungsfaktoren sind, die auf die Achsen u, v des Kamerabildes angewendet werden;
- $\gamma$ ein Parameter ist, der die Rechtwinkligkeit zwischen den Achsen u, v der Kamerabildebene definiert;
- wobei $\mu$ ein durch den folgenden Ausdruck gegebener Koeffizient ist:

$$\mu = \frac{z_\pi}{\psi_z}$$

- wobei $z_\pi$ eine vorbestimmte Höhe über dem mindestens einen mobilen Ziel (2) ist, auf der das mindestens eine mobile Ziel beobachtbar bleibt;
- wobei $\psi_z$ die z-Komponente des Vektors $\overrightarrow{\Psi_G}$ ist, und;
- wobei durch das Setzen eines Wertes für den Gierwinkel $\alpha_\omega$ gegeben durch:

$$\alpha_w = \frac{\pi}{2} - \arctan\left(-\frac{\omega_{1x}}{\omega_{1y}}\right)$$

der Unsicherheitsbereich im Zusammenhang mit der Bestimmung der Koordinaten des mindestens einen mobilen Ziels in Bezug auf das globale Referenzsystem minimiert wird, wenn das mindestens eine Flugzeug (1) das mindestens eine mobile Ziel (2) von der optimalen Position aus überwacht.

2. Verfahren zur Positionierung von Flugzeugen auf Grundlage der Analyse von Bildern mobiler Ziele nach Anspruch 1, wobei das Bestimmen der Koordinaten des mindestens einen mobilen Ziels in Bezug auf das globale Referenzsystem Folgendes umfasst:

a. Bestimmen des Abstands $D_t$ zwischen dem mindestens einen Flugzeug (1) und dem mindestens einen mobilen Ziel (2) mittels mindestens eines an dem mindestens einen Flugzeug (1) angebrachten Sensors;
b. Bestimmen der Koordinaten $u_t$, $v_t$ des mindestens einen mobilen Ziels (2) in Bezug auf die Achsen u, v des Kamerabildes;
c. Bestimmen des Winkels $\theta$ der Kamera in Bezug auf den Rumpf des mindestens einen Flugzeugs (1);
d. Bestimmen der Ausrichtung des mindestens einen Flugzeugs (1) in Bezug auf das globale Referenzsystem mittels mindestens eines an dem mindestens einen Flugzeug (1) angebrachten Sensors, wobei die Ausrichtung des mindestens einen Flugzeugs (1) in Bezug auf das globale Referenzsystem mittels mindestens eines Gierwinkels $\alpha_\omega$ des Flugzeugs (1) gegeben ist, und;
e. Anwenden eines Algorithmus zur Umwandlung der Koordinaten $u_t$, $v_t$ des mindestens einen mobilen Ziels (2) innerhalb des Kamerabildes in die Koordinaten $x_t$, $y_t$, $z_t$ des mindestens einen mobilen Ziels (2) in Bezug auf das globale Referenzsystem.

3. Verfahren zur Positionierung von Flugzeugen auf Grundlage der Analyse von Bildern mobiler Ziele nach Anspruch 2, wobei der folgende Algorithmus zur Bestimmung der Koordinaten des mindestens einen mobilen Ziels (2) in Bezug auf das globale Referenzsystem verwendet wird:

$$s * \tilde{m} = C * T_C^G * \tilde{M} = C * [R_C^G \quad \hat{t}_C] * \tilde{M}$$

- wobei $\tilde{m}$ definiert ist als $\quad \tilde{m} = \begin{bmatrix} u_t \\ v_t \\ 1 \end{bmatrix};$

- wobei "s" ein vorgegebener Koeffizient ist, dessen Wert ist:

$$s = \frac{D_t - f}{f}$$

- wobei "f' eine Brennweite der Kamera ist;

- wobei $\tilde{M}$ definiert ist als $\quad \tilde{M} = \begin{bmatrix} x_t \\ y_t \\ z_t \\ 1 \end{bmatrix};$

- wobei $T_C^G$ eine Rotations- und Verschiebungsmatrix zum Übergang vom globalen Referenzsystem zu einem Referenzsystem des mindestens einen Flugzeugs (1) ist, wobei $T_C^G = [R_C^G \quad \hat{t}_C];$

- wobei "C" eine intrinsische Matrix der Kamera ist, definiert durch:

$$C = \begin{bmatrix} \alpha_u & \gamma & u_0 \\ 0 & \alpha_v & v_0 \\ 0 & 0 & 1 \end{bmatrix}$$

- wobei $u_0$ und $v_0$ die Koordinaten des Mittelpunkts des Kamerabildes sind;
- wobei $\alpha_u$ und $\alpha_v$ Skalierungsfaktoren sind, die auf die Achsen u, v des Kamerabildes angewendet werden, und;
- $\gamma$ ein Parameter ist, der die Rechtwinkligkeit zwischen den Achsen u, v des Kamerabildes definiert;

wobei $\begin{bmatrix} \boldsymbol{R}_C^G & \hat{\boldsymbol{t}}_C \end{bmatrix}$ eine zusammengesetzte Matrix ist, gegeben durch:

$$\begin{bmatrix} \boldsymbol{R}_C^G & \hat{\boldsymbol{t}}_C \end{bmatrix} = \begin{bmatrix} \boldsymbol{R}_C^G & \hat{\boldsymbol{t}}_C \\ \boldsymbol{000} & \boldsymbol{1} \end{bmatrix};$$

- wobei $\hat{t}_C$ ein Verschiebungsvektor ist, der vom Ursprung des globalen Referenzsystems zum Ursprung eines Referenzsystems der Kamera zeigt;

- wobei $\boldsymbol{R}_C^G$ eine Rotationsmatrix zwischen dem Referenzsystem der Kamera (3) und dem globalen Referenzsystem ist, gegeben durch:

$$\boldsymbol{R}_C^G = \boldsymbol{R}_U^C * \boldsymbol{R}_G^U$$

- wobei $\boldsymbol{R}_U^C$ eine Rotationsmatrix zwischen dem Referenzsystem der Kamera und dem Referenzsystem des mindestens einen Flugzeugs und $\boldsymbol{R}_G^U$ eine Rotationsmatrix zwischen dem Referenzsystem des mindestens einen Flugzeugs (1) und dem globalen Referenzsystem ist;

- wobei $\boldsymbol{R}_G^U$ für Null-Roll- und -Nickwinkel des mindestens einen Flugzeugs (1) gegeben ist durch:

$$\boldsymbol{R}_G^U = \begin{bmatrix} \sin\alpha_w & \cos\alpha_w & 0 \\ \cos\alpha_w & -\sin\alpha_w & 0 \\ 0 & 0 & -1 \end{bmatrix},$$

und;

- wobei für eine Kamera (3), die an einer Symmetrieebene des mindestens einen Flugzeugs (1) ausgerichtet und in einem Winkel θ in Bezug auf den Rumpf des mindestens einen Flugzeugs (1) geneigt ist, $\boldsymbol{R}_U^C$ gegeben ist durch:

$$\boldsymbol{R}_U^C = \begin{bmatrix} 0 & \sin\theta & \cos\theta \\ 1 & 0 & 0 \\ 0 & \cos\theta & -\sin\theta \end{bmatrix}.$$

4. Verfahren zur Positionierung von Flugzeugen auf Grundlage der Analyse von Bildern mobiler Ziele nach Anspruch 2, worin der Unsicherheitsbereich im Zusammenhang mit der Bestimmung der Position des mindestens einen mobilen Ziels (2) in Bezug auf das globale Referenzsystem durch den folgenden mathematischen Ausdruck einer Ellipse in einer horizontalen Oberfläche gegeben ist:

$$(\boldsymbol{x} - \boldsymbol{k})^T * \boldsymbol{\Phi} * (\boldsymbol{x} - \boldsymbol{k}) = 1$$

$$x = \begin{pmatrix} x \\ y \end{pmatrix},$$

- wobei x ein durch gegebener Vektor ist, wobei x, y generische horizontale Koordinaten im globalen Bezugssystem darstellen;

$$k = \begin{pmatrix} x_t \\ y_t \end{pmatrix},$$

- wobei $\kappa$ ein durch gegebener Vektor ist, der die Koordinaten des Ellipsenmittelpunkts beinhaltet, welche die bestimmten Koordinaten $x_t$, $y_t$ des mindestens einen mobilen Ziels in Bezug auf das globale Bezugssystem in einer horizontalen Ebene sind;
- wobei $\phi$ eine Matrix aus Koeffizienten ist, die die Form der Ellipse angeben;
- wobei die Matrix $\phi$ basierend auf folgendem Ausdruck berechnet wird:

$$\Phi = \frac{1}{4} * \Sigma^{-1}$$

- wobei $\Sigma$ eine Kovarianzmatrix ist, die durch Rauschmerkmale der an der Schätzung der Position des mindestens einen mobilen Ziels beteiligten Kamera (3) und Sensoren gegeben ist, und;

- wobei ein Autovektor $\omega_1$ der Matrix $\phi$, gegeben durch $\omega_1 = \begin{pmatrix} \omega_{1x} \\ \omega_{1y} \end{pmatrix},$ die Hauptunsicherheitsrichtung der Unsicherheit im Zusammenhang mit der Bestimmung der Position des mindestens einen mobilen Ziels (2) in Bezug auf das globale Referenzsystem darstellt.

5. Verfahren zur Positionierung von Flugzeugen auf Grundlage der Analyse von Bildern mobiler Ziele nach Anspruch 1, wobei die maximale Geschwindigkeit des mindestens einen Flugzeugs (1) und der momentane Kraftstoffstand des mindestens einen Flugzeugs (1) gemessen und berücksichtigt werden, um jedem Flugzeug eine Aufgabe zum Tracken mindestens eines mobilen Ziels (2) zuzuweisen und ein Flugzeug (1) bei Bedarf zum Betanken zu einer Basis zurückkehren zu lassen.

6. Verfahren zur Positionierung von Flugzeugen auf Grundlage der Analyse von Bildern mobiler Ziele nach Anspruch 1, wobei das Verfahren auch eine beliebige Kombination aus einem oder mehreren der Folgenden umfasst:

   - Bestimmen der Größe des mindestens einen mobilen Ziels (2) mittels eines Algorithmus, der die augenscheinliche Größe des mindestens einen mobilen Ziels im Kamerabild misst und die genannte augenscheinliche Größe in eine geschätzte tatsächliche Größe übersetzt;
   - Bestimmen der Farbe des mindestens einen mobilen Ziels (2);
   - Bestimmen der Geschwindigkeit des mindestens einen mobilen Ziels (2).

7. Verfahren zur Positionierung von Flugzeugen auf Grundlage der Analyse von Bildern mobiler Ziele nach Anspruch 7, wobei es das Zuordnen eines Vektors $b_k(t)$', zu jedem mobilen Ziel (2) k umfasst, wobei der genannte Vektor Informationen über Gewicht, Farbe, Klasse, Position und Geschwindigkeit des mobilen Ziels (2) umfasst.

8. Verfahren zur Positionierung von Flugzeugen auf Grundlage der Analyse von Bildern mobiler Ziele nach Anspruch 1, wobei die optimale Position des mindestens einen Flugzeugs (1) wahlweise ausgewählt wird zwischen Punkten, auf Linien parallel oder senkrecht zu Hauptachsen, die den Unsicherheitsbereich im Zusammenhang mit der Bestimmung der Position des mindestens einen mobilen Ziels (2) in Bezug auf das globale Referenzsystem durchqueren.

9. System zur Positionierung von Flugzeugen (1), das mindestens eine an einem Flugzeug (1) angebrachte Kamera (3) und mindestens eine an die Kamera (3) angeschlossene Mikrosteuereinheit umfasst, wobei die mindestens eine Mikrosteuereinheit zum Berechnen einer optimalen Position für ein Flugzeug (1) auf Grundlage der Analyse von Bildern mobiler Ziele (2), die von der mindestens einen Kamera (3) aufgenommen wurden, ausgelegt ist, **dadurch gekennzeichnet, dass** die mindestens eine Mikrosteuereinheit zum Analysieren der Bilder mobiler Ziele (2) gemäß einem Verfahren nach einem der vorstehenden Ansprüche ausgelegt ist.

**10.** System zur Positionierung von Flugzeugen nach Anspruch 10, wobei die mindestens eine Mikrosteuereinheit mit dem Autopiloten eines Flugzeugs verbunden ist, wobei die mindestens eine Mikrosteuereinheit so konfiguriert ist, dass sie den Autopiloten des Flugzeugs veranlasst, das Flugzeug (1) in Richtung der bestimmten optimalen Position für das Flugzeug (1) zu fliegen.

**11.** System zur Positionierung von Flugzeugen nach Anspruch 10, wobei die mindestens eine Mikrosteuereinheit mit einer Mensch-Maschine-Schnittstelle verbunden ist, wobei die mindestens eine Mikrosteuereinheit zum Senden von Anweisungen an die Mensch-Maschine-Schnittstelle ausgelegt ist, wobei die Anweisungen Informationen über die bestimmte optimale Position für das Flugzeug (1) umfassen.

**12.** Computerlesbares Medium, **dadurch gekennzeichnet, dass** es Anweisungen umfasst, die, wenn sie von einem Computer ausgeführt werden, den Computer veranlassen, das Verfahren nach einem der Ansprüche 1 bis 8 durchzuführen.

**Revendications**

**1.** Procédé de positionnement d'avions (1) en fonction d'analyse d'images de cibles mobiles (2) comprenant les étapes suivantes :

a. identifier au moins une cible mobile (2) au moyen d'au moins une image obtenue au moyen d'au moins une caméra (3) montée sur au moins un avion (1) ;
b. déterminer, au moyen de capteurs internes de l'au moins un avion, les coordonnées de l'au moins un avion par rapport à un système de référence global ;
c. déterminer les coordonnées de l'au moins une cible mobile par rapport au système de référence global ;
d. générer une zone d'incertitude associée à la détermination des coordonnées de l'au moins une cible mobile par rapport au système de référence global ;
e. déterminer une position optimale de l'au moins un avion à partir de laquelle surveiller l'au moins une cible mobile (2) de telle sorte que la zone d'incertitude associée à la détermination des coordonnées de l'au moins une cible mobile par rapport au système de référence global soit minimisée, et ;
f. déplacer l'avion (1) à la position optimale ;
**caractérisé en ce que**
l'algorithme suivant est utilisé pour déterminer la position optimale de l'au moins un avion (1):

$$\begin{bmatrix} x_w \\ y_w \\ z_w \end{bmatrix} = \begin{bmatrix} x_t \\ y_t \\ z_t \end{bmatrix} + \mu * \overrightarrow{\Psi_G}$$

- où $x_w$, $y_w$, $z_w$ sont les coordonnées de la position optimale de l'au moins un avion (1) ;

- où $\overrightarrow{\Psi_G}$ est un vecteur, donné par $\overrightarrow{\Psi_G} = \begin{bmatrix} \psi_x \\ \psi_y \\ \psi_z \end{bmatrix}$, pointant de l'au moins un avion vers l'au moins une cible mobile et exprimé en coordonnées du système de référence global, dans lequel $\overrightarrow{\Psi_G}$ est obtenu par l'expression :

$$\overrightarrow{\Psi_G} = \begin{bmatrix} \psi_x \\ \psi_y \\ \psi_z \end{bmatrix} = \begin{bmatrix} 0 & \sin\theta & \cos\theta \\ 1 & 0 & 0 \\ 0 & \cos\theta & -\sin\theta \end{bmatrix} * \begin{bmatrix} \sin\alpha_w & \cos\alpha_w & 0 \\ \cos\alpha_w & -\sin\alpha_w & 0 \\ 0 & 0 & -1 \end{bmatrix} * \overrightarrow{\Psi_C}$$

- $\overrightarrow{\Psi_C}$ étant un vecteur qui, en coordonnées du système de référence de la caméra, pointe de l'au moins un avion vers l'au moins une cible mobile, et qui est donné par l'expression :

$$\overrightarrow{\Psi_c} = \frac{1}{s} * \begin{bmatrix} \dfrac{1}{\alpha_u} & \dfrac{-\gamma}{\alpha_u * \alpha_v} & \dfrac{\gamma * v_0}{\alpha_u * \alpha_v} - \dfrac{u_0}{\alpha_v} \\ 0 & \dfrac{1}{\alpha_v} & \dfrac{-v_0}{\alpha_v} \\ 0 & 0 & 1 \end{bmatrix} * \begin{bmatrix} u_t \\ v_t \\ 1 \end{bmatrix}$$

- où s, est un coefficient prédéterminé dont la valeur est:

$$s = \frac{D_t - f}{f}$$

- où, f, est une distance focale de la caméra (3) ;
- où uo et vo sont les coordonnées du point central de l'image de la caméra ;
- où $\alpha_u$ et $\alpha_v$ sont des facteurs d'échelle appliqués aux axes, u, v, de l'image de la caméra ;
- $\gamma$ est un paramètre qui définit l'orthogonalité entre les axes, u, v, du plan de l'image de la caméra ;
- où $\mu$ est un coefficient donné par l'expression:

$$\mu = \frac{z_\pi}{\psi_z}$$

- où $z_\pi$ est une hauteur prédéterminée au-dessus de l'au moins une cible mobile (2) à laquelle l'au moins une cible mobile reste observable ;
- où $\psi_z$ est la composante z du vecteur $\overrightarrow{\Psi_G}$, et ;
- dans lequel, en imposant une valeur pour l'angle de lacet, $\alpha_w$, donnée par :

$$\alpha_w = \frac{\pi}{2} - \arctan\left(- \frac{\omega_{1x}}{\omega_{1y}}\right)$$

la zone d'incertitude associée à la détermination des coordonnées de l'au moins une cible mobile par rapport au système de référence global est minimisée, lorsque l'au moins un avion (1) surveille l'au moins une cible mobile (2) depuis la position optimale.

2. Procédé de positionnement d'avions en fonction d'analyse d'images de cibles mobiles selon la revendication 1, dans lequel la détermination des coordonnées de l'au moins une cible mobile par rapport au système de référence global comprend :

a. déterminer, au moyen d'au moins un capteur monté sur l'au moins un avion (1), la distance, $D_t$, existant entre l'au moins un avion (1) et l'au moins une cible mobile (2) ;
b. déterminer les coordonnées, $u_t$, $v_t$, de l'au moins une cible mobile (2) par rapport aux axes, u, v, de l'image de la caméra ;
c. déterminer l'angle, $\theta$, de la caméra par rapport au fuselage de l'au moins un avion (1) ;
d. déterminer, au moyen d'au moins un capteur monté sur l'au moins un avion (1), l'orientation de l'au moins un avion (1) par rapport au système de référence global, dans lequel l'orientation de l'au moins un avion (1) par rapport au système de référence global est donnée par au moins un angle en lacet, $\alpha_w$, de l'avion (1), et ;
e. appliquer un algorithme pour transformer les coordonnées, ut, vt, de l'au moins une cible mobile (2) dans l'image de la caméra, en les coordonnées, $x_t$, $y_t$, $z_t$, de l'au moins une cible mobile (2) par rapport au système de référence global.

3. Procédé de positionnement d'avions en fonction d'analyse d'images de cibles mobiles selon la revendication 2, dans lequel l'algorithme suivant est utilisé pour déterminer les coordonnées de l'au moins une cible mobile (2) par rapport au système de référence global :

$$s * \tilde{m} = C * T_C^G * \tilde{M} = C * [R_C^G \quad \hat{t}_C] * \tilde{M}$$

- où $\tilde{m}$ est défini comme $\tilde{m} = \begin{bmatrix} u_t \\ v_t \\ 1 \end{bmatrix};$

- où "s", est un coefficient prédéterminé dont la valeur est :

$$s = \frac{D_t - f}{f}$$

- où "f" est une distance focale de la caméra ;

- où $\tilde{M}$ est défini comme $\tilde{M} = \begin{bmatrix} x_t \\ y_t \\ z_t \\ 1 \end{bmatrix};$

- où $T_C^G$ est une matrice de rotation et de translation pour passer du système de référence global à un système de référence de l'au moins un avion (1), où $T_C^G = [R_C^G \quad \hat{t}_C];$

- où "C" est une matrice intrinsèque de la caméra définie par:

$$C = \begin{bmatrix} \alpha_u & \gamma & u_0 \\ 0 & \alpha_v & v_0 \\ 0 & 0 & 1 \end{bmatrix}$$

- où uo et vo sont les coordonnées du point central de l'image de la caméra ;
- où $\alpha_u$ et $\alpha_v$ sont des facteurs d'échelle appliqués aux axes, u, v, de l'image de la caméra, et ;
- $\gamma$ est un paramètre qui définit l'orthogonalité entre les axes, u, v, de l'image de la caméra ;

- où $[R_C^G \quad \hat{t}_C]$ est une matrice composée donnée par :

$$[R_C^G \quad \hat{t}_C] = \begin{bmatrix} R_C^G & \hat{t}_C \\ 000 & 1 \end{bmatrix};$$

- où $\hat{t}_C$ est un vecteur de translation, pointant de l'origine du système de référence global vers l'origine d'un système de référence de la caméra ;

- où $R_C^G$ est une matrice de rotation entre le système de référence de la caméra (3) et le système de référence global, qui est donnée par :

$$R_C^G = R_U^C * R_G^U$$

- où $R_U^C$ est une matrice de rotation entre le système de référence de la caméra et le système de référence de l'au moins un avion, et où $R_G^U$ est une matrice de rotation entre le système de référence de l'au moins un avion (1) et le système de référence global ;

- où, pour les angles de roulis et de tangage nuls de l'au moins un avion (1), $R_G^U$ est donnée par :

$$R_G^U = \begin{bmatrix} \sin\alpha_W & \cos\alpha_w & 0 \\ \cos\alpha_W & -\sin\alpha_w & 0 \\ 0 & 0 & -1 \end{bmatrix},$$

et ;
- où, pour une caméra (3) alignée sur un plan de symétrie de l'au moins un avion (1) et inclinée selon un angle θ par rapport au fuselage de l'au moins un avion (1), $R_U^C$ est donnée par :

$$R_U^C = \begin{bmatrix} 0 & \sin\theta & \cos\theta \\ 1 & 0 & 0 \\ 0 & \cos\theta & -\sin\theta \end{bmatrix}.$$

4. Procédé de positionnement d'avions en fonction d'analyse d'images de cibles mobiles selon la revendication 2, dans lequel la zone d'incertitude associée à la détermination de la position de l'au moins une cible mobile (2) par rapport au système de référence global est donnée par l'expression mathématique suivante d'une ellipse dans une surface horizontale :

$$(x - k)^T * \Phi * (x - k) = 1$$

- où x est un vecteur, donné par $x = \begin{pmatrix} x \\ y \end{pmatrix}$, où x, y, expriment des coordonnées horizontales génériques dans le système de référence global ;

- où k est un vecteur, donné par $k = \begin{pmatrix} x_t \\ y_t \end{pmatrix}$, comprenant les coordonnées du centre de l'ellipse, qui sont les coordonnées déterminées, $x_t$, $y_t$, de l'au moins une cible mobile par rapport au système de référence global dans un plan horizontal ;
- où $\phi$ est une matrice de coefficients indiquant la forme de l'ellipse ;
- dans lequel la matrice $\phi$ est calculée en fonction de l'expression :

$$\Phi = {}^1\!/_4 * \Sigma^{-1}$$

dans lequel $\Sigma$ est une matrice de covariance donnée par les caractéristiques de bruit de la caméra (3) et des capteurs impliqués dans l'estimation de la position de l'au moins une cible mobile, et ;

- dans lequel un autovecteur $\omega_1$ de la matrice $\phi$, donné par $\omega_1 = \begin{pmatrix} \omega_{1x} \\ \omega_{1y} \end{pmatrix}$, exprime la direction principale d'incertitude de l'incertitude associée à la détermination de la position de l'au moins une cible mobile (2) par rapport au système de référence global.

5. Procédé de positionnement d'avions en fonction d'analyse d'images de cibles mobiles selon la revendication 1, dans lequel la vitesse maximale de l'au moins un avion (1) et le niveau de carburant instantané de l'au moins un avion (1) sont mesurés et pris en compte pour attribuer à chaque avion une mission pour suivre au moins une cible mobile (2) et pour faire revenir un avion (1) à une base pour faire le plein si nécessaire.

6. Procédé de positionnement d'avions en fonction d'analyse d'images de cibles mobiles selon la revendication 1, dans lequel le procédé comprend en outre une combinaison quelconque d'un ou plusieurs de :

- détermination de la taille de l'au moins une cible mobile (2) au moyen d'un algorithme qui mesure la taille apparente de l'au moins une cible mobile dans l'image de la caméra et traduit ladite taille apparente en une taille estimée réelle ;
- déterminer la couleur de l'au moins une cible mobile (2) ;
- déterminer la vitesse de l'au moins une cible mobile (2).

7. Procédé de positionnement d'avions en fonction d'analyse d'images de cibles mobiles selon la revendication 7, dans lequel il comprend affecter un vecteur $\overrightarrow{b_k(t)}$, à chaque cible mobile (2), k, où ledit vecteur comprend des informations relatives au poids, à la couleur, à la classe, à la position et à la vitesse de la cible mobile (2).

8. Procédé de positionnement d'avions en fonction d'analyse d'images de cibles mobiles selon la revendication 1, dans lequel la position optimale de l'au moins un avion (1) est choisie alternativement entre des points appartenant à des lignes parallèles ou perpendiculaires aux axes principaux qui traversent la zone d'incertitude associée à la détermination de la position de l'au moins une cible mobile (2) par rapport au système de référence global.

9. Système de positionnement d'avions (1) qui comprend au moins une caméra (3) montée sur un avion (1) et au moins une unité de microcontrôleur connectée à la caméra (3), dans lequel l'au moins une unité de microcontrôleur est configurée pour calculer une position optimale pour un avion (1) en fonction d'analyse d'images de cibles mobiles (2) prises par l'au moins une caméra (3), **caractérisé en ce que** l'au moins une unité de microcontrôleur est configurée pour analyser les images de cibles mobiles (2) selon un procédé décrit dans l'une quelconque des revendications précédentes.

10. Système de positionnement d'avions selon la revendication 10, dans lequel l'au moins une unité de microcontrôleur est connectée au pilote automatique d'un avion, dans lequel l'au moins une unité de microcontrôleur est configurée pour commander le pilote automatique de l'avion pour piloter l'avion (1) vers la position optimale déterminée pour l'avion (1).

11. Système de positionnement d'avions selon la revendication 10, dans lequel l'au moins une unité de microcontrôleur est reliée à une interface homme-machine, dans lequel l'au moins une unité de microcontrôleur est configurée pour envoyer des instructions à l'interface homme-machine, les instructions comprenant des informations sur la position optimale déterminée pour l'avion (1).

12. Support lisible par ordinateur, **caractérisé en ce qu'**il comprend des instructions qui, lorsqu'elles sont exécutées par un ordinateur, amènent l'ordinateur à exécuter le procédé selon l'une quelconque des revendications 1 à 8.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New target monitoring Guidance Laws for UAV. *PhD Thesis. Niki Regina,* 2011
- **YUN SANG et al.** *Proceedings of 2014 IEEE Chinese guidance, navigation and control conference*
- **FORSSÉN, P.-E.** Low and Medium Level Vision using Channel Representations. *PhD thesis, Linköping University,* 2004, ISBN 91-7373-876-X